# EUROPEAN PATENT APPLICATION

(11) **EP 4 696 991 A1**
(43) Date of publication of application: **18.02.2026**
(21) Application number: 25188296.5
(22) Date of filing: 08.07.2025
(51) Int. Cl.: G01F 22/00, B65D 90/48, G01F 23/292

(54) **SYSTEM FOR MONITORING A FLOATING ROOF OF A STORAGE TANK**

(30) Priority: 05.08.2024 US 202418794576
(71) Applicant: Life Safety Distribution GmbH, 1180 Rolle (CH)
(72) Inventor: KHURANA, Mohit, Charlotte, 28202 (US); ZAKARIA, Ryadh Abdullah, Charlotte, 28202 (US)
(74) Representative: Haseltine Lake Kempner LLP

(57) **Abstract**

A system for monitoring a floating roof of a storage tank is disclosed. The system comprising a plurality of tags coupled to a floating roof of a storage tank at a plurality of locations. The storage tank is configured to contain a liquid. At least one image capturing device is installed in proximity to the storage tank and configured to capture one or more images of the plurality of tags. At least one processor is communicatively coupled to the at least one image capturing device and configured to determine a distance of the plurality of tags from the at least one image capturing device; determine an orientation of the floating roof from the determined distance of the plurality of tags; compare the determined orientation with a predefined threshold; and generate one or more alarms when the determined orientation of the floating roof exceeds the predefined threshold.

## Description

### TECHNOLOGICAL FIELD

The invention generally relates to a system for monitoring a floating roof of a storage tank and a method thereof.

### BACKGROUND

In various industrial applications, floating roofs are widely used for liquid storage tanks, such as oil storage tanks, to avoid vapour collection and safe operation. Conventionally, the floating roofs are prone to mechanical issues due to various environmental factors such as accumulation of water in case of rain or accumulation of snow on the floating roof or high winds. Such mechanical issues may cause malfunctions, such as causing the floating roof to tilt relative to the storage tank, causing roof to submerge in product inside the tank or roof may get stuck causing a vapour gap between the liquid within the storage tank and the floating roof. Hence, a tilt angle and surface level of the floating roof is required to be continuously monitored relative to the product level in the tank. Currently, the monitoring of the tilt angle and surface level of the floating roof are done by a one or more -level transmitter mounted on top of a periphery of the tank that is installed with the floating roof. Such three-level transmitters are usually expensive and may demand additional mounting accessories and cabling to install such monitoring systems.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a system for monitoring a floating roof of a storage tank is disclosed. The system comprising a plurality of tags coupled to the floating roof of the storage tank at a plurality of locations. Further, the storage tank is configured to contain liquid. At least one image capturing device installed in proximity to the storage tank. Further, the at least one image capturing device is configured to capture one or more images of each of the plurality of tags. At least one processor communicatively coupled to the image capturing device. Further, the at least one processor is configured to determine a distance of the plurality of tags from the at least one image capturing device, determine an orientation of the floating roof from the determined distance of the plurality of tags, compare the determined orientation with a predefined threshold, and generate one or more alarms when the determined orientation of the floating roof exceeds the predefined threshold based at least on the comparison.

In some embodiments, the plurality of tags are configured to be installed over the floating roof of the storage tank. Further, the plurality of tags correspond to at least one of a simple sticker with high contrast patterns, a predefined mechanical structure, a predefined mechanical patterns, or a fixed object identified on the floating roof of the storage tank.

In some embodiments, the at least one image capturing device further comprises one or more image sensors. Further, the one or more image sensors correspond to at least one of infrared (IR), ultraviolet (UV), or visible image sensor.

In some embodiments, the orientation corresponds to a tilt angle and a level of the floating roof of the storage tank. In some embodiments, the system further comprising a gauge unit communicatively coupled to the at least one processor. Further, the gauge unit is configured to determine a level of the liquid inside the storage tank.

In some embodiments, the at least one processor is configured to determine a difference of the level of the floating roof and the level of the liquid is outside the predefined threshold, for generating the one or more alarms through digital, analog, or communication outputs. In some embodiments, upon generating the one or more alarms, the at least one processor is configured to feed the one or more images or feed visualization of the floating roof with the determined orientation and alarms to other subsystems such as digital video manager or video surveillance systems.

In some embodiments, the at least one processor is configured to determine the orientation of the floating roof based at least on the calibrated distance.

In some embodiments, the system further comprising a light source positioned in proximity to the storage tank or within the at least one image capturing device. Further, the light source is configured to illuminate each of the plurality of tags with a modulated signal to avoid noise in the one or more images of the plurality of tags from surrounding sources or low (or no) light conditions. Further, the modulated signal corresponds to at least one of infrared (IR), ultraviolet (UV), or visible image sensor.

In some embodiments, a memory is communicatively coupled with the at least one processor to store one or more instructions provided by the user during calibration. Further, the memory is configured to configured to store a correct orientation of the floating roof or the level of the floating roof of the storage tank.

In some embodiments, the system further comprising a computing device communicatively coupled to the at least one processor, for calibrating the system during installation or maintenance of the image capturing device.

In some embodiments, the system further comprising a multi axis stabilizing module operationally coupled with the at least one image capturing device for determining orientation of the at least one image capturing device when the orientation of the at least one image capturing device changes due to temperature, wind, or other factors.

In some embodiments, the predefined threshold corresponds to a required angle and a required height of the floating roof with respect to a surface of the liquid.

In another example embodiment, a method is disclosed. The method comprising determining, via at least one processor, a distance of a plurality of tags coupled to the floating roof, from at least one image capturing device installed in proximity to the storage tank, determining, via the at least one processor, an orientation of the floating roof from the determined distance of the plurality of tags, comparing, via the at least one processor, the determined orientation with a predefined threshold, and generating, via the at least one processor, one or more alarms when the determined orientation of the floating roof exceeds the predefined threshold based at least on the comparison.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a block diagram of a system in accordance with an example embodiment of the present disclosure;
FIG. 2A illustrates an architecture of the system in accordance with an example embodiment of the present disclosure;
FIG. 2B illustrates a detailed architecture of the system in accordance with an example embodiment of the present disclosure;
FIGS. 3A-3C illustrates a top vide of various types of the plurality of tags in accordance with an example embodiment of the present disclosure;
FIG. 4 illustrates a flowchart of the system in accordance with an example embodiment of the present disclosure; and
FIG. 5 illustrates a flowchart of a method for monitoring the floating roof of the storage tank in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

Embodiments of the present disclosure will be described more fully hereinafter with reference to the accompanying drawings in which like numerals represent like elements throughout the several figures, and in which example embodiments are shown. Embodiments of the claims may, however, be embodied in many different forms and should not be construed as limited to the embodiments set forth herein. The examples set forth herein are non-limiting examples and are merely examples among other possible examples.

The present disclosure provides embodiments of a system and method for monitoring a floating roof of a storage tank. Embodiments may comprise a plurality of tags coupled to the floating roof of the storage tank at a plurality of locations where the storage tank may be configured to contain liquid. Embodiments may comprise at least one image capturing device installed in proximity to the storage tank. Embodiments may be configured to capture one or more images of each of the plurality of tags from the at least one image capturing device. Embodiments may comprise at least one processor that may be communicatively coupled to the at least one image capturing device. Embodiments may be configured to determine a distance of the plurality of tags from the at least one image capturing device by the at least one processor. Embodiments may be configured to determine an orientation of the floating roof from the determined distance of the plurality of tags by the at least one processor. Embodiments may be configured to compare the determined orientation with a predefined threshold by the at least one processor. Embodiments may be configured to generate one or more alarms when the determined orientation of the floating roof exceeds the predefined threshold based at least on the comparison.

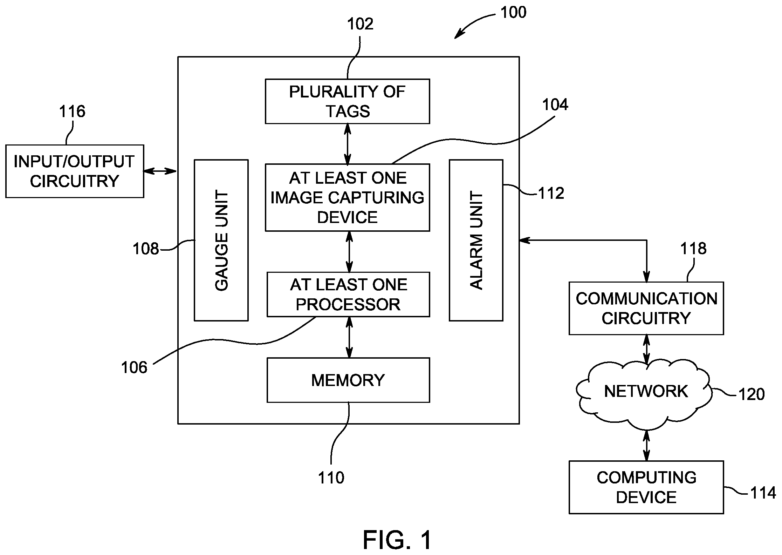

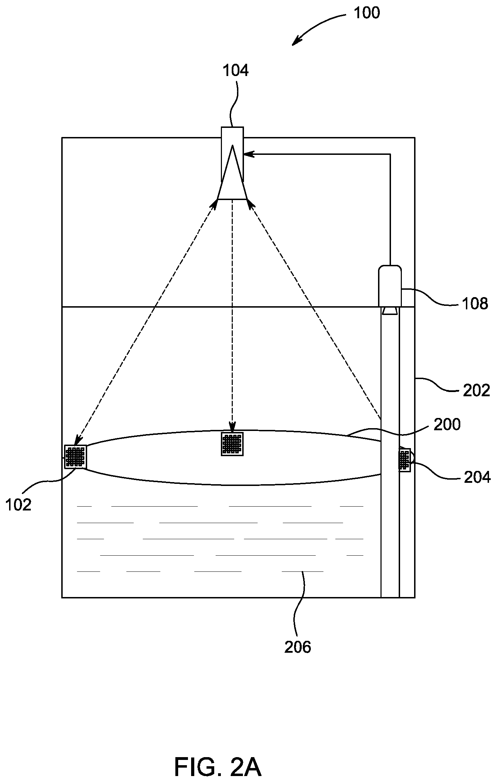

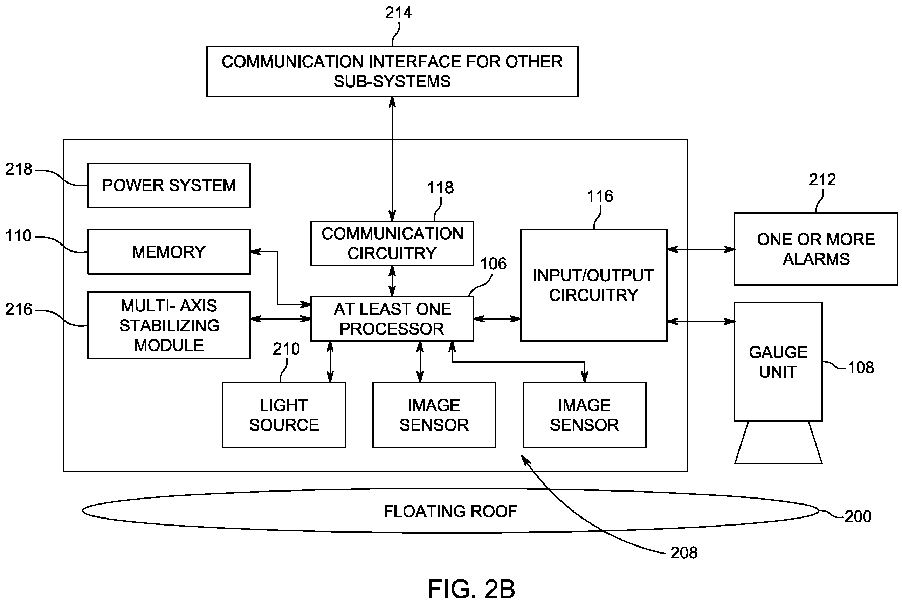

FIG. 1 illustrates a block diagram of a system 100, in accordance with an example embodiment of the present disclosure. The system 100 may comprise a plurality of tags 102 (FIG. 2), at least one image capturing device 104, and at least one processor 106. The system 100 may further comprise a gauge unit 108. Further, the at least one processor 106 may be communicatively coupled with a memory 110. The system 100 may further comprise an alarm unit 112, a computing device 114, an input/output circuitry 116, a communication circuitry 118, and a network 120.

In some embodiments, the plurality of tags 102 may be coupled to a floating roof 200 of a storage tank 202. Further, the plurality of tags 102 may be coupled at a plurality of locations of the floating roof 200 of the storage tank 202. Further, the storage tank 202 may be installed within a facility (not shown). In some embodiments, the storage tank 202 may be configured to contain a liquid 206. Further, the liquid 206 contained within the storage tank 202 may include but not limited to oil, chemicals, inflammable fuels, etc.

In some embodiments, the storage tank 202 may be installed with the floating roof 200. Further, the floating roof 200 may be configured to cover the liquid 206 contained within the storage tank 202. Further, the floating roof 200 may be configured to prevent exposure of the liquid 206 with surroundings of the storage tank 202. In some embodiments, the floating roof 200 may be configured to float over surface of the liquid 206 contained inside the storage tank 202 such that at least a portion of the floating roof 200 remains in contact with the liquid 206 when the floating roof 200 is operating as intended. In some embodiments, the floating roof 200 may be configured to float at a pre-defined height inside the storage tank 202. Further, at least a portion of the floating roof 200 may be positioned at a pre-defined distance above a surface level of the liquid 206 contain within the storage tank 202. In some embodiments, the plurality of tags 102 may be installed at the plurality of locations of the floating roof 200 of the storage tank 202. In some embodiments, the plurality of tags 102 may be installed over the floating roof 200, such as on an upper surface of the floating roof 200.

In some embodiments, each tag of the plurality of tags 102 comprises a pattern. In some embodiments, the pattern on each tag of the plurality of tags 102 may corresponds to a checkered pattern 204. In various other examples, the pattern on each tag of the plurality of tags 102 may corresponds to a solid pattern or like. In some embodiments, each tag of the plurality of tags 102 may be installed at a pe-defined distance from each other. Further, the plurality of tags 102 may be installed at the plurality of locations on the floating roof 200 of the storage tank 202 such that each tag of the plurality of tags 102 may be arranged in a particular formation. In some embodiments, the shape of the plurality of tags 102 may be selected in a view such that each tag of the plurality of tags 102 may be properly visible from a pre-defined height above the storage tank 202. In some embodiment, a ratio between a distance between the center of the floating roof 200 and at least one of the plurality of tags 102 and a radius of the floating roof 200 may be at least 1:2, such as at least 1.5:2, such as at least 1.8:2.

In some embodiments, the system 100 may further comprise the at least one image capturing device 104. In some embodiments, the at least one image capturing device 104 may be inside within the facility. Further, the at least one image capturing device 104 may be installed in proximity to the storage tank 202. For example, the at least one image capturing device 104 may be positioned over the storage tank 202 and approximately aligned within a center of the floating roof 200. In one example, the at least one image capturing device 104 may be positioned such that the plurality of tags 102 collectively vertically encompass the at least one image capturing device 104, as depicted in FIG. 2. In some embodiments, the at least one image capturing device 104 may be configured to capture one or more images of each tag of the plurality of tags 102 coupled with the floating roof 200 of the storage tank 202.

In some embodiments, the at least one image capturing device 104 may comprise an optical arrangement, an image sensing unit, and an analog-to-digital converter (ADC). In some embodiments, the optical arrangement may comprise one or more optical lenses. Further, the optical arrangement may be configured to capture one or more light rays entering into the optical arrangement after striking on the floating roof 200. In some embodiments, the optical arrangement may be configured to direct the one or more light rays towards the image sensing unit. In some embodiments, the one or more light rays may be configured to store optical information regarding the floating roof 200.

In some embodiments, the image sensing unit may comprise one or more sensors. Further, the one or more sensors may comprise at least one of a charge-coupled device (CCD) sensor, a complementary metal-oxide semiconductor (CMOS) sensor, or like. Further, the image sensing unit may be configured to detect the one or more light rays entered inside the at least one image capturing device 104 through the optical arrangement. In some embodiments, the image sensing unit may be configured to convert the one or more light rays into one or more electrical signals. In some embodiments, the one or more electrical signals comprises various voltages, based on the type of the one or more captured images.

In some embodiments, the ADC may be configured to capture the one or more electrical signals from the image sensing unit. Further, the ADC may be configured to convert the one or more electrical signals into digital data. In some embodiments, the digital data may comprise information regarding the one or more captured images in a form of a plurality of digital pulses. Further, the at least one image capturing device 104 may be communicatively coupled to the at least one processor 106. In some embodiments, the ADC may be configured to send the digital data to the at least one processor 106.

In some embodiments, the system 100 further comprises a light source 210 (FIG. 2B). In some embodiments, the light source 210 may be positioned in proximity to the storage tank 202. In some embodiments, the light source 210 may be positioned within the at least one image capturing device 104. In some embodiments, the light source 210 may be configured to emit one or more light rays towards the floating roof 200 of the storage tank 202. In some embodiments, the light source 210 may correspond to but not limited to an infrared (IR) light source.

In some embodiments, the light source 210 may be configured to illuminate each tag of the plurality of tags 102 to avoid noise in the one or more images of the plurality of tags 102 captured by the at least one image capturing device 104 in order to avoid false alarms. In some embodiments, the light source 210 may be configured to illuminate each tag of the plurality of tags 102 with a modulated signal (i.e., IR or visible or UV) to avoid noise in the one or more images of the plurality of tags 102 from surroundings sources or low (or no) lighting conditions.

In some embodiments, the system 100 may further comprise the gauge unit 108. Further, the gauge unit 108 may be communicatively coupled to the at least one processor 106. Further, the gauge unit 108 may be installed at least partially within the storage tank 202. Further, the gauge unit 108 may be configured to determine the level of the liquid 206 contained inside the storage tank 202. In some embodiments, the gauge unit 108 may be configured to determine a distance between a surface level of the liquid 206 inside the storage tank 202 and a height of the storage tank 202. In some embodiments, the gauge unit 108 may include but is not limited to ultrasonic level sensor, radar level transmitter, magnetostrictive level transmitter, guided wave radar level sensors, pressure transmitter, capacitance level sensors, float level switches, optical level sensors, differential pressure transmitters, or like. In some embodiments, the gauge unit 108 may be communicatively coupled with the at least one processor 106. Further, the gauge unit 108 may be configured to send data related to the level of the liquid 206 inside the storage tank 202 to the at least one processor 106.

In some embodiments, the at least one processor 106 may be configured to receive the digital data from the at least one image capturing device 104. Further, the at least one processor 106 may be configured to determine a distance of the plurality of tags 102 from the at least one image capturing device 104, based at least on the one or more images. In some embodiments, the orientation may correspond to a tilt angle and a level of the floating roof. For example, the at least one processor 106 may be configured to use a triangulation method or a trilateration method to determine the tilt angle of the floating roof 200. Further, upon determining the tilt angle of the floating roof 200, the at least one processor 106 may be configured to compare the determined orientation (i.e., determined tilt angle of the floating roof 200) with a predefined threshold. Further, the at least one processor 106 may be configured to generate one or more alarms 212 (FIG. 2B) when the determined orientation of the floating roof 200 exceeds the predefined threshold based at least on the comparison.

In some embodiments, the at least one processor 106 may be configured to receive the data related to the level of the liquid 206 inside the storage tank 202 from the gauge unit 108. Further, the at least one processor 106 may be configured to determine a level of the floating roof 200 of the storage tank 202 based at least on the one or more images captured by the at least one image capturing device 104. For example, the at least one processor 106 may be configured to use a triangulation method or a trilateration method to determine the level of the floating roof 200. Further, the at least one processor 106 may be configured to determine a difference of the level of the floating roof 200 and the level of the liquid 206 inside the storage tank 202 is outside the predefined threshold, for generating the one or more alarms 212 through digital, analog, or communication outputs.

In some embodiments, the system 100 may comprise other subsystems such as digital video manager or video surveillance systems. In some embodiment, upon generating the one or more alarms 212, the at least one processor 106 may be configured to feed the one or more images or feed visualization of the floating roof with the determined orientation and alarms to other subsystems.

In some embodiments, the system 100 further comprises the alarm unit 112. Further, the alarm unit 112 may be communicatively coupled to the at least one processor 106. Further, the alarm unit 112 may be configured to generate one or more alarms 212 upon receiving the signal generated by the at least one processor 106. The alarm unit 112 may be installed inside the facility to alert one or more concerned persons regarding the exceeded tilt angle of the floating roof 200 and/or the exceeded difference between the level of the floating roof 200 and the level of the liquid 206.

In some embodiments, the system 100 may comprise a computing device 114. In some embodiments, the computing device 114 may be communicatively coupled to the at least one processor 106. Further, the at least one processor 106 may be configured to feed the one or more images or feed visualization of the floating roof 200 with the determined tilt angle to the computing device 114. In some embodiments, the computing device 114 may also be accessed by a user to calibrate the system 100 during installation or maintenance of the image capturing device 104. In some embodiments, during installation or maintenance of the at least one image capturing device 104 the orientation of the at least one image capturing device 104 may have changes due to temperature, wind, or other factors.

In some embodiments, the system 100 may comprise the memory 110. Further, the memory 110 may be communicatively coupled to the at least one processor 106. In some embodiments, the memory 110 may be configured to store one or more instructions provided by the user during calibration. Further, the memory 110 is configured to configured to store a correct orientation of the floating roof 200 or the level of the floating roof 200 of the storage tank 202. Further, the memory 110 may be configured to store a set of instructions and data executed by the at least one processor 106. Further, the memory 110 may include the one or more instructions that are executable by the at least one processor 106 to perform specific operations.

As illustrated in FIG. 1, the system 100 may comprise the input/output circuitry 116 that enables the user to communicate or interface with the system 100 via the computing device 114. It may be noted that the input/output circuitry 116 may act as a medium to transmit input from the computing device 114 to and from the system 100. In some embodiments, the communication circuitry 118 may allow the system 100 and the computing device 114 to exchange data or information with other system 100 or apparatuses. Further, the system 100 may be communicatively coupled with the network 120 via one or more protocols and software modules for sending and receiving data or information. In some embodiments, the communication circuitry 118 may include Ethernet ports, Wi-Fi adapters, or communication protocols for connecting with other systems. The communication circuitry 118 may allow the system 100 to stay up-to-date.

It will be apparent to one skilled in the art that above-mentioned components of the system 100 have been provided only for illustration purposes, without departing from the scope of the disclosure.

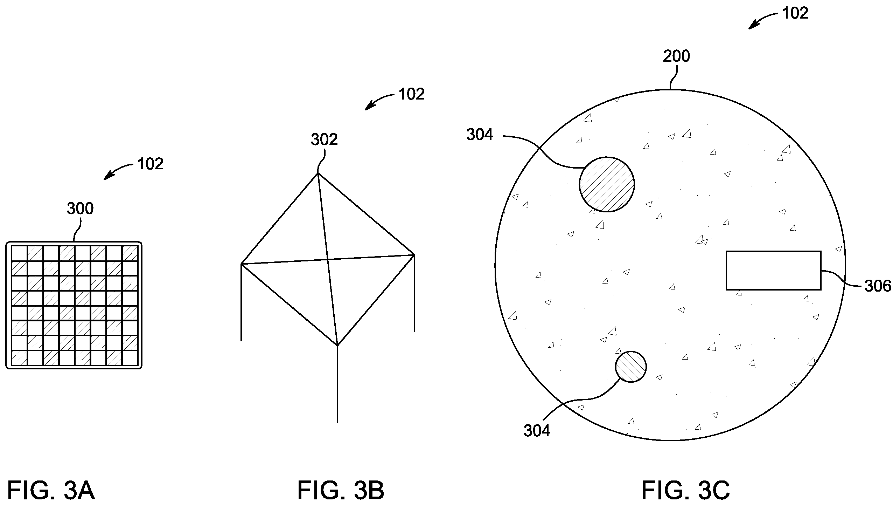

FIG. 2A illustrates an architecture of the system 100, in accordance with an example embodiment of the present disclosure. FIG. 2B illustrates a detailed architecture of the system 100, in accordance with an example embodiment of the present disclosure. FIGS. 3A-3C illustrates a top vide of various types of the plurality of tags 102, in accordance with an example embodiment of the present disclosure. FIG. 2A-3C are described in conjunction with FIG. 1.

In some embodiments, the storage tank 202 may be inside within the facility. Further, the storage tank 202 may be configured to contain the liquid 206. Further, the storage tank 202 may be constructed with a material that may include but not limited to steel, iron, copper, or like. Further, the material of the storage tank 202 may be selected in a view that the liquid 206 contained inside the storage may not be influenced or exposed to any contaminants.

As illustrated in FIG. 2A and 2B, the storage tank 202 may be installed with the floating roof 200. Further, the floating roof 200 may be configured to float above the surface level of the liquid 206 contained inside the storage tank 202. In some embodiments, the floating roof 200 may be constructed with a shape that may include but not limited to a circular shape, chamfered shape, oval shape or like. Further, the floating roof 200 may be configured to float above the surface level due to a buoyancy of the floating roof 200.

As illustrated in FIGS. 3A-3C, the plurality of tags 102 may be installed over the floating roof 200 of the storage tank 202. Further, the plurality of tags 102 may correspond to at least one of a simple sticker 300 with high contrast patterns, a predefined mechanical structure 302, a predefined mechanical patterns 304, or a fixed object identified 306 on the floating roof 200 of the storage tank 202. In some embodiments, the plurality of tags 102 may comprise at least three tags 102. In some embodiments, the at least three tags 102 may define a spatial triangle.

In some embodiments, the at least one image capturing device 104 may be positioned within the spatial triangle (as illustrated in FIG. 2). In some embodiments, the at least one image capturing device 104 may comprise one or more image sensors 208. Further, the one or more image sensors 208 may correspond to at least one of infrared (IR), ultraviolet (UV), or visible image sensor. In some embodiments, the at least one image capturing device 104 may be configured to capture the one or more images of the plurality of tags 102 installed in proximity to the storage tank 202. Further, the at least one image capturing device 104 may be communicatively coupled with the at least one processor 106.

In some embodiments, the plurality of tags 102 may correspond to a plurality of light reflectors. Further, the plurality of light reflectors may be coupled with the floating roof 200 at the plurality of locations. Further, the light source 210 may be configured to emit one or more light rays towards the plurality of light reflectors to illuminate the plurality of light reflectors. Further, the at least one image capturing device 104 may be configured to capture one or more images of the plurality of light reflectors when illuminated. Further, the at least one image capturing device 104 may be configured to send the one or more captured images to the at least one processor 106. Further, based at least on the one or more images of the plurality of light reflectors, the at least one processor 106 may determine the tilt angle of the floating roof 200.

Further, the at least one processor 106 may be configured to determine the orientation (i.e., the tilt angle) of the floating roof 200, based at least on the one or more images. Further, upon determining the orientation (i.e., the tilt angle) of the floating roof 200, the at least one processor 106 may be configured to compare the determined tilt angle of the floating roof 200 with the predefined threshold tilt angle of the floating roof 200. Further, the at least one processor 106 may be configured to generate the signal upon determining the tilt angle of the floating roof 200 exceeds the predefined threshold. Further, the predefined tilt angle threshold corresponds to a required angle of the floating roof 200 with respect to a surface of the liquid 206. Further, the at least one processor 106 may be configured to drive the alarm unit 112 to alert the one or more concerned persons regarding the exceeded the tilt angle of the floating roof 200.

In some embodiments, the at least one processor 106 may be configured to determine the orientation based at least on the one or more mages captured by the at least one image capturing device 104. Further, the at least one processor 106 may be configured to determine the difference between the determined level of the floating roof 200 and the level of the liquid 206 inside the storage tank 202 with the predefined threshold value. Further, the at least one processor 106 may be configured to generate the one or more alarms 212 upon determining the difference between the level of the floating roof 200 and the level of the liquid 206 exceeds the predefined threshold. Further, the at least one processor 106 may be configured to generate the one or more alarms 212 through digital, analog, or communication outputs.

In some embodiments, upon generating the one or more alarms 212, the at least one processor 106 may be configured to feed the one or more images or feed visualization of the floating roof 200 with the determined orientation and alarms 212 to other subsystems such as digital video manager or video surveillance systems. Further, the at least one processor 106 may be configured to drive the alarm unit 112 to alert the one or more concerned persons regarding the exceeded difference between the level of the floating roof 200 and the level of the liquid 206. In some embodiments, the at least one processor 106 may be communicatively coupled with the other subsystems through the communication circuitry 118 and a communication interface 214.

In some embodiments, the system 100 may further comprise a multi axis stabilizing module 216. Further, the multi axis stabilizing module 216 may be operationally coupled with the at least one image capturing device 104. In some embodiments, the multi axis stabilizing module 216 may be configured to determine orientation of the at least one image capturing device 104. In some embodiments, the at least one processor 106 may be configured to determine changes in the orientation of the at least one image capturing device 104 through the multi axis stabilizing module 216. Further, the multi axis stabilizing module 216 may be configured to stabilize the image capturing device 104 when the orientation of the at least one image capturing device 104 changes due to temperature, wind, or other factors.

In some embodiments, the system 100 may comprise a power system 220. Further, the power system 220 may be configured to provide an electric power supply to various electronic or electrical components associated with the system 100. Further, the power system 220 may be connected with the system 100 through a plurality of electrical buses.

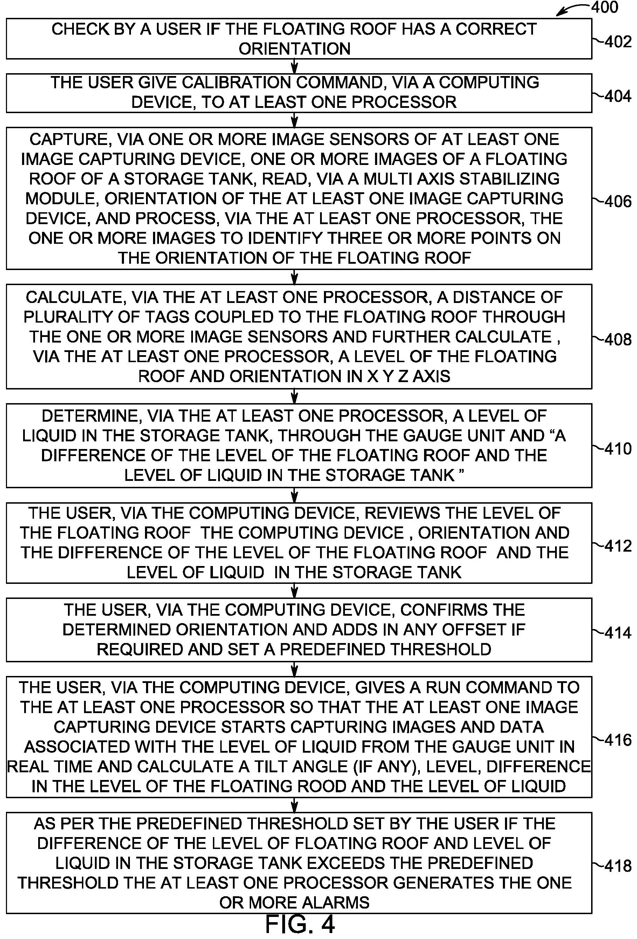

FIG. 4 illustrates a flowchart 400 of the system 100, in accordance with an example embodiment of the present disclosure.

At operation 402, the user may check the correct orientation of the floating roof 200. Further, the orientation of the floating roof 200 may correspond to a tilt angle of the floating roof 200 and the level of the floating roof 200 inside the storage tank 202. At operation 404, the user may give command to the at least one processor 106 through the computing device 114. Further, the command may correspond to the one or more instructions associated with calibration of the floating roof 200.

At operation 406, the at least one image capturing device 104 may be configured to capture the one or more images of the floating roof 200 of the storage tank 202. Successively, the at least one processor 106 may be configured to determine orientation of the at least one image capturing device 104 through the multi axis stabilizing module 216, and thereafter the at least one processor 106 may be configured to identify three or more points on the orientation of the floating roof 200 using the one or more images captured by the at least one image capturing device 104.

At operation 408, the at least one processor may be configured to calculate the distance of the plurality of tags 102 coupled to the floating roof 200 through the one or more image sensors 208. Successively, the at least one processor 106 may be configured to calculate the level of the floating roof 200 and orientation of the floating roof 200 in X-axis, Y-axis, and Z-axis. At operation 410, the at least one processor 106 may be configured to determine the level of liquid 206 in the storage tank 202, through the gauge unit 108. Further, the at least one processor 106 may be configured to determine the difference of the level of the floating roof 200 and the level of liquid 206 in the storage tank 202.

At operation 412, the user may review the level of the floating roof 200, orientation and the difference of the level of the floating roof 200 and the level of liquid 206 in the storage tank 202, through the computing device 114. At operation 414, the user may confirm the determined orientation and adds in any offset if required and set a predefined threshold, through the computing device 114. At operation 416, the user may give a run command to the at least one processor 106 through the computing device 114 so that the at least one image capturing device 104 starts capturing images and data associated with the level of liquid from the gauge unit 108 in real time and calculate the tilt angle (if any), level, difference in the level of the floating roof 200 and the level of liquid. At operation 418, the at least one processor 106 generates alarm on digital, analog or communication outputs with/without live feed or images, as per the predefined threshold set by the user if the difference of the level of the floating roof 200 and the level of liquid 206 in the storage tank 202 exceeds the predefined threshold.

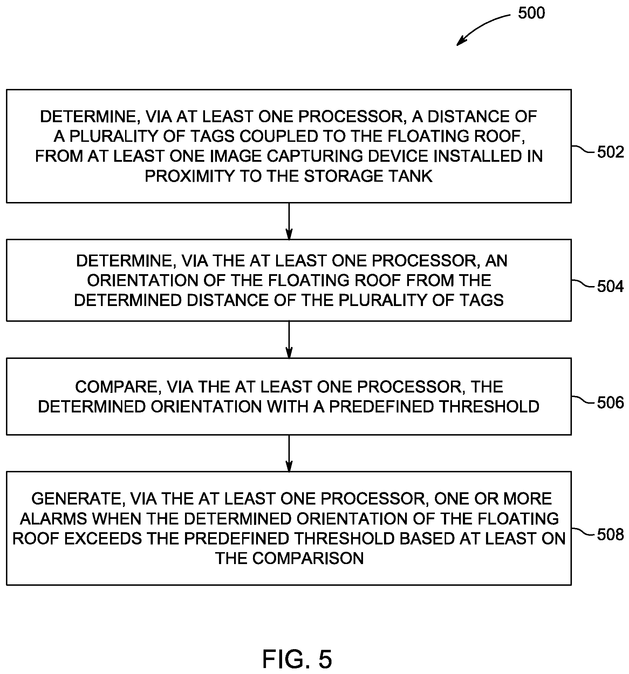

FIG. 5 illustrates a flowchart of a method 500 for monitoring the floating roof 200 of the storage tank 202, in accordance with an example embodiment of the present disclosure. FIG. 5 is described in conjunction with FIGS. 1 and 4.

At operation 502, the at least one processor 106 may be configured to determine the distance of the plurality of tags 102 coupled to the floating roof 200 through the at least one image capturing device 104 installed in proximity to the storage tank 202. Further, the plurality of tags 102 may be coupled with the floating roof 200 at the plurality of locations.

For example, a storage tank 202 contained with the liquid 206 is installed within a chemical industry. Further, the liquid 206 may correspond to a chemical solution. Further, the storage tank 202 comprises a floating roof 200 that is configured to cover the chemical solution and float over a surface level of the liquid 206. Further, the floating roof 200 is coupled with the plurality of tags 102. Further, at least one image capturing device 104 is installed in proximity to the storage tank 202. Further, the at least one image capturing device 104 corresponds to a dual camera. Further, the at least one image capturing device 104 is configured to capture one or more images of the plurality of tags 102. Further, at least one processor 106 is communicatively coupled with the at least one image capturing device 104. Further, the at least one processor 106 is configured to determine a distance the plurality of tags 102 coupled to the floating roof 200 through the at least one image capturing device 104.

At operation 504, the at least one processor 106 may be configured to determine the orientation of the floating roof 200 based at least on the one or more images of the plurality of tags 102 captured by the at least one image capturing device 104. Further, the at least one processor 106 may be configured to determine the orientation of the floating roof 200 by the one or more images of the plurality of tags 102 captured by the at least one image capturing device 104 using the triangulation method. Further, the triangulation method involves measuring angles from known reference points to determine the position or orientation of the plurality of tags 102 on the floating roof 200.

Further, the at least one processor 106 is configured to determine a tilt angle of the floating roof 200 based at least on the one or more images of the plurality of tags 102 captured by the at least one image capturing device 104.

At operation 506, the at least one processor 106 may be configured to compare the determined orientation of the floating roof 200 with the predefined threshold. Further, the predefined threshold corresponds to a correct orientation of the floating roof 200 with respect to a surface of the liquid 206. For example, the at least one processor 106 is configured to receive the one or more images from the at least one image capturing device 104. Further, the at least one processor 106 compares the determined orientation of the floating roof 200 with the predefined threshold.

At operation 508, the at least one processor 106 may be configured to generate the one or more alarms 212 when the determined orientation of the floating roof 200 exceeds the predefined threshold based at least on the comparison. Further, the at least one processor 106 may be configured to generate the one or more alarms 212 through digital, analog, or communication outputs. For example, the at least one processor 106 generates one or more alarms 212 upon determining the determined orientation of the floating roof 200 exceeds the predefined threshold. Further, the at least one processor 106 is communicatively coupled with the alarm unit 112 and other subsystems.

Various embodiments of the present disclosure disclose the system 100 and method to monitor the floating roof 200 of the storage tank 202. Embodiments may ensure proper tilting of the floating roof 200 by determining the orientation of the floating roof 200 by the at least one processor 106 using the one or more images captured by the at least one image capturing device 104. Embodiments may be configured to maintain level of surface of the floating roof 200 inside the storage tank 202 by using the image capturing device 104. Embodiments may be configured to maintain the level of liquid 206 inside the storage tank 202 using the gauge unit 108. Embodiments may be configured to alert the one or more concerned persons using the alarm unit 112.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system for monitoring a floating roof of a storage tank, the system comprising:
a plurality of tags coupled to the floating roof of the storage tank at a plurality of locations, wherein the storage tank is configured to contain a liquid;
at least one image capturing device installed in proximity to the storage tank, wherein the at least one image capturing device is configured to capture one or more images of each of the plurality of tags; and
at least one processor communicatively coupled to the at least one image capturing device, wherein the at least one processor is configured to:
determine a distance of each of the plurality of tags from the at least one image capturing device;
determine an orientation of the floating roof from the determined distance of the plurality of tags;
compare the orientation of the floating roof determined with a predefined threshold; and
generate one or more alarms when the orientation of the floating roof determined exceeds the predefined threshold, based at least on the comparison.

2. The system of claim 1, wherein the plurality of tags are configured to be installed over the floating roof of the storage tank, wherein the plurality of tags correspond to at least one of a simple sticker with high contrast patterns, a predefined mechanical structure, a predefined mechanical pattern, or a fixed object identified on the floating roof of the storage tank.

3. The system of claim 1, wherein the at least one image capturing device comprises one or more image sensors, and wherein the one or more image sensors correspond to at least one of infrared (IR) sensor, ultraviolet (UV) sensor, or visible image sensor.

4. The system of claim 1, wherein the orientation corresponds to a tilt angle and a level of the floating roof of the storage tank.

5. The system of claim 1, further comprising a gauge unit communicatively or through analog signal, coupled to the at least one processor, wherein the gauge unit is configured to determine a level of the liquid inside the storage tank.

6. The system of claim 5, wherein the at least one processor is configured to determine a difference of the level of the floating roof and the level of the liquid is outside the predefined threshold, for generating the one or more alarms through digital, analog, or communication outputs.

7. The system of claim 1, wherein upon generating the one or more alarms, the at least one processor is configured to feed the one or more images or feed visualization of the floating roof with the determined orientation and alarms to other subsystems such as digital video manager or video surveillance systems.

8. The system of claim 4, wherein the at least one processor is configured to determine the orientation of the floating roof based at least on a calibrated distance.

9. The system of claim 1, further comprising a light source positioned in proximity to the storage tank or within the at least one image capturing device, wherein the light source is configured to illuminate each of the plurality of tags with a modulated signal to avoid noise in the one or more images of the plurality of tags from surrounding sources or low or no light conditions, and wherein the modulated signal corresponds to at least one of infrared (IR) signal, ultraviolet (UV) signal, or visible signal.

10. The system of claim 1, further comprising a computing device communicatively coupled to the at least one processor, for calibrating the system during installation or maintenance of the image capturing device.

11. The system of claim 10, wherein a memory is communicatively coupled with the at least one processor to store one or more instructions provided by a user during the calibration, and wherein the memory is configured to store a correct orientation of the floating roof or a level of the floating roof of the storage tank.

12. The system of claim 11, wherein the predefined threshold corresponds to a required angle and a required height of the floating roof set by the user, with respect to a surface of the liquid.

13. The system of claim 1, further comprising a multi axis stabilizing module operationally coupled with the at least one image capturing device for determining orientation of the at least one image capturing device when the orientation of the at least one image capturing device changes due to temperature, wind, or other factors.

14. A method for monitoring a floating roof of a storage tank, the method comprising:
determining, via at least one processor, a distance of a plurality of tags coupled to the floating roof, from at least one image capturing device installed in proximity to the storage tank;
determining, via the at least one processor, an orientation of the floating roof from the determined distance of the plurality of tags;
comparing, via the at least one processor, the determined orientation with a predefined threshold; and
generating, via the at least one processor, one or more alarms when the determined orientation of the floating roof exceeds the predefined threshold based at least on the comparison.

15. The method of claim 14, wherein the plurality of tags are configured to be installed over the floating roof of the storage tank, wherein the plurality of tags correspond to at least one of a simple sticker with high contrast patterns, a predefined mechanical structure, a predefined mechanical patterns, or a fixed object identified on the floating roof of the storage tank.
